# EUROPEAN PATENT APPLICATION

(11) **EP 2 927 518 A1**
(43) Date of publication of application: **07.10.2015**
(21) Application number: 14172369.2
(22) Date of filing: 13.06.2014
(51) Int. Cl.: F16C 1/20, B05C 19/00, B05D 1/16

(54) **Flocked driving cable and manufacturing method thereof**

(30) Priority: 03.04.2014 KR 20140040070
(71) Applicant: Daedong System Co., Ltd., Incheon 405-846 (KR)
(72) Inventor: Lee Ho Chul, 403-030 Incheon (KR); Lee, Won Suk, 407-722 Incheon (KR)
(74) Representative: Jell, Friedrich

(57) **Abstract**

Disclosed is a manufacturing method of a sunroof cable unit. The sunroof cable unit serves to transmit power to a sunroof of an automobile. The sunroof cable unit includes a raw cable including a core extending by a long length in a given directional axis and a coil helically surrounding the core, the coil defining a groove between a pair of neighboring helices, an adhesive layer formed by applying an adhesive to the groove of the raw cable, and a plurality of piles adhered to the adhesive layer by electrostatic force generated within an electric field.

## Description

### BACKGROUND OF THE INVENTION

### Field of the Invention

The present invention relates to a sunroof cable unit and a manufacturing method thereof and, more particularly, to a sunroof cable unit, which has an improved configuration and manufacturing process to enhance mass productivity and manufacturing simplicity of products with regard to attachment of piles that may function to minimize noise and friction of a sunroof cable, and a manufacturing method of the sunroof cable unit.

### Description of the Related Art

In general, a sunroof cable unit serves to transmit power to a sunroof of an automobile to enable opening/closing of the sunroof. The sunroof cable unit includes a steel core, a stranded wire surrounding the core, a coil helically surrounding the stranded wire and flocked members helically fitted into a groove defined by the coil.

Here, to minimize friction between elements used to open or close a sunroof, all conventional sunroof cable units have focused on the configuration or manufacturing method of the flocked members.

Changes in the configuration and manufacturing method of the flocked members have caused difficulty in forming and increased manufacturing costs because design change with respect to the small-scale member requires a complicated manufacturing process and the like.

As another solution to minimize friction between elements used to open or close a sunroof, covering the coil with a tube has been proposed.

However, this conventional solution has several disadvantages, such as difficulty in covering the coil with the tube and an increase in the number of manufacturing processes because additional processes of manufacturing the tube and of coupling the manufactured tube to the coil are necessary.

### SUMMARY OF THE INVENTION

Therefore, the present invention has been made in view of the above problems, and it is an object of the present invention to provide a sunroof cable unit, which is capable of minimizing friction between elements used to open or close a sunroof and of achieving reduced manufacturing costs and enhanced mass productivity of products, and a manufacturing method of the sunroof cable unit.

In accordance with one aspect of the present invention, to accomplish the above and other objects, a sunroof cable unit, which is configured to transmit power to a sunroof of an automobile, includes a raw cable including a core extending by a long length in a given directional axis and a coil helically surrounding the core, the coil defining a groove between a pair of neighboring helices, an adhesive layer formed by applying an adhesive to the groove of the raw cable, and a plurality of piles adhered to the adhesive layer by electrostatic force generated in an electric field.

In accordance with another aspect of the present invention, a manufacturing method of a sunroof cable unit, configured to transmit power to a sunroof of an automobile, includes simultaneously transporting a plurality of raw cables to an electric field chamber, wherein each raw cable extends by a long length in a given directional axis, applying an adhesive to a groove defined in each raw cable prior to introducing the raw cables into the electric field chamber, and generating electrostatic force within the electric field chamber in a state in which the plural raw cables are introduced into the electric field chamber, so as to adhere a plurality of piles to the grooves of the plural raw cables to which the adhesive has been applied.

According to one embodiment of the present invention, the manufacturing method of the sunroof cable unit may further include generating an air stream within the electric field chamber using a blowing device to allow the plural piles fed into the electric field chamber to uniformly float within the electric field chamber.

In addition, according to one embodiment of the present invention, a pair of electrodes constituting the electric field chamber may be arranged to face each other about the given directional axis, and charges of different polarities may be applied to the pair of electrodes arranged to face each other.

In addition, according to one embodiment of the present invention, the raw cables introduced into the electric field chamber may be rotated between electrodes, or the electrodes may be rotated relative to the raw cables.

### BRIEF DESCRIPTION OF THE DRAWINGS

The above and other objects, features and other advantages of the present invention will be more clearly understood from the following detailed description taken in conjunction with the accompanying drawings, in which:
FIGS. 1 to 3 are reference views for explanation of a manufacturing method of a sunroof cable unit according to one embodiment of the present invention;
FIG. 4 is a view for explanation of the adhesion form of piles that are adhered to raw cables by a pair of electrodes according to one embodiment of the present invention;
FIG. 5 is a view for explanation of the direction of electrostatic force depending on charges applied to a pair of electrodes;
FIG. 6 is a view for explanation of the arrangement of a plurality of raw cables for adhesion of piles thereto according to one embodiment of the present invention; and
FIG. 7 is a view for explanation of rotation of a pair of electrodes about raw cables according to another embodiment of the present invention.

### DETAILED DESCRIPTION OF THE INVENTION

Hereinafter, a sunroof cable unit and a manufacturing method thereof according to one embodiment of the present invention will be described with reference to the accompanying drawings.

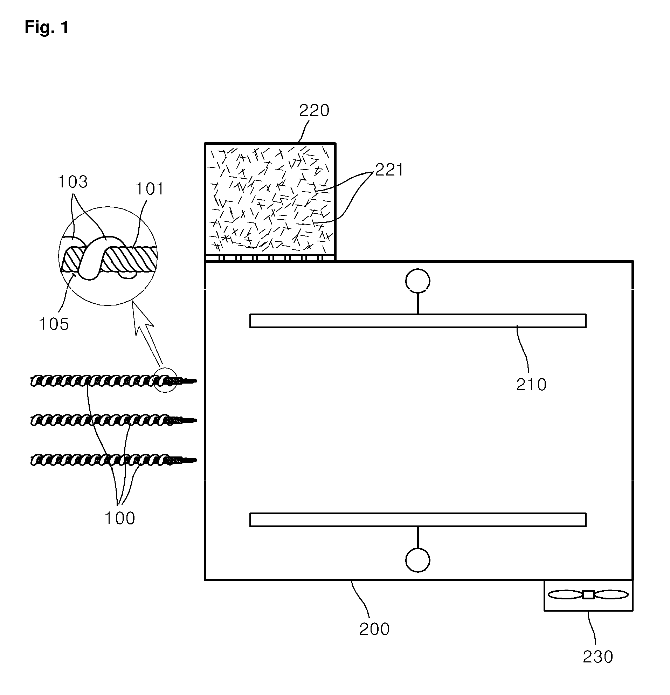

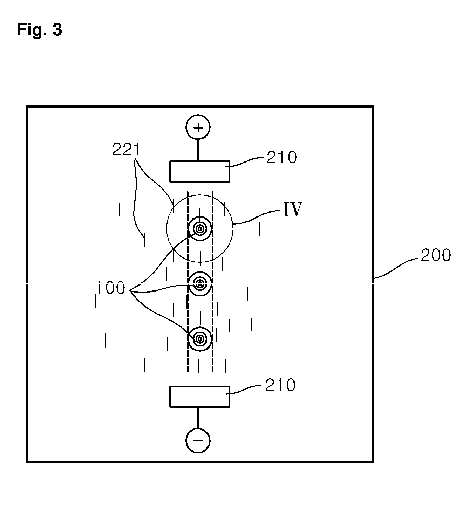

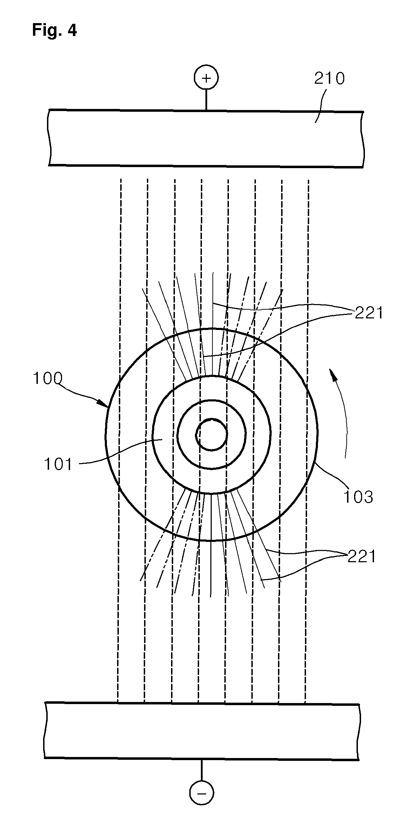

FIGS. 1 to 3 are reference views for explanation of a manufacturing method of a sunroof cable unit according to one embodiment of the present invention, and FIG. 4 is a view for explanation of the adhesion form of piles that are adhered to raw cables by a pair of electrodes according to one embodiment of the present invention.

As exemplarily shown in the drawings, the sunroof cable unit according to one embodiment of the present invention serves to transmit power to a sunroof of an automobile. The sunroof cable unit is preferably comprised of raw cables 100, an adhesive layer and a plurality of piles 221.

Each of the raw cables 100 includes a core 101 extending by a long length in a given directional axis and a coil 103 helically surrounding the core 101, the coil 103 defining a groove 105 between a pair of neighboring helices.

The adhesive layer is formed on a surface of the raw cable 100 as an adhesive is applied to the groove 105 of the raw cable 100. Generally, although application of the adhesive to the raw cable 100 is preferably implemented using an external ejection nozzle (not shown), the disclosure is not limited thereto and various other devices capable of applying an adhesive to the raw cable 100 or forming an adhesive layer on the raw cable 100 may be used.

The plural piles 221 are adhered to the adhesive layer of the raw cable 100 by electrostatic force E that is generated in an electric field chamber 200. Here, the piles 221 are preferably flocked yarns obtained by cutting yarns to a short length, without being limited thereto.

According to one embodiment of the present invention, a plurality of piles is adhered to raw cables at once. Owing to these piles, the present invention may advantageously reduce friction and noise of the sunroof cable unit.

To manufacture the sunroof cable unit as described above, the electric field chamber 200 is required to adhere the piles 221 to the raw cables 100 to which the adhesive has been applied.

Meanwhile, the electric field chamber 200, which is employed to manufacture the sunroof cable unit according to one embodiment of the present invention, preferably includes a pair of electrodes 210 to generate electrostatic force E in the electric field chamber 200 and a pile feed box 220 to feed the piles 221 to the raw cables 100. In addition, a blowing device 230 may further be incorporated in the electric field chamber 200, to allow the respective piles 221 to uniformly float in the electric field chamber 200.

A manufacturing method of a sunroof cable unit according to one embodiment of the present invention relates to the manufacture of a sunroof cable unit that serves to transmit power to a sunroof of an automobile.

First, the plural raw cables 100, which extend by a long length in a given directional axis, are simultaneously transported to the electric field chamber 200.

Meanwhile, prior to introducing the raw cables 100 into the electric field chamber 200, the adhesive is applied to the groove 105 of each raw cable 100. Although application of the adhesive to the raw cable 100 is preferably implemented using an external ejection nozzle (not shown), the disclosure is not limited thereto and various other devices capable of adhering the adhesive to the raw cable 100 or forming an adhesive layer on the raw cable 100 may be used.

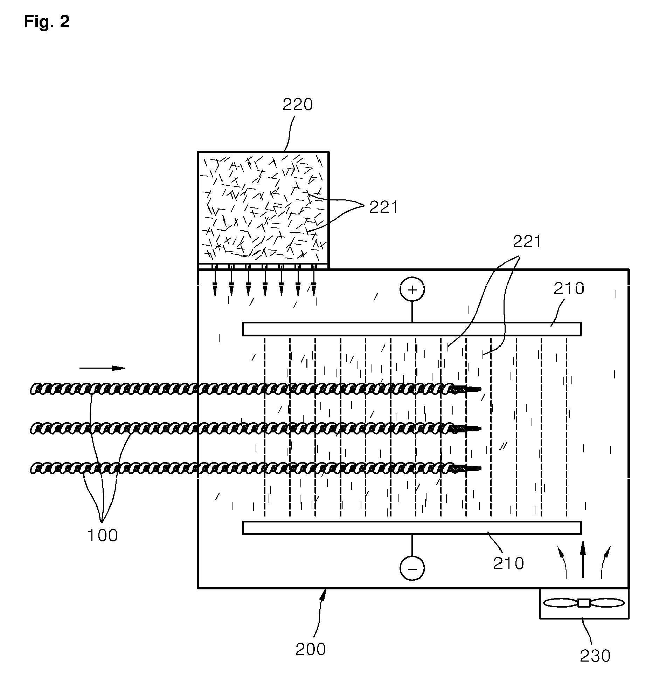

Thereafter, as exemplarily shown in FIG. 2, as the plural raw cables 100, to which the adhesive has been applied, are introduced into the electric field chamber 200, the plural piles 221 are adhered to the grooves 105 of the raw cables 100 by electrostatic force E generated in the electric field chamber 200. More specifically, when electrostatic force E is generated in the electric field chamber 200 in a state in which the plural piles 221 are introduced into the electric field chamber 200, the piles 221 fed into the electric field chamber 200 are moved by the electrostatic force E in the direction of electrostatic force E. Thereby, the piles 221 are adhered to the raw cables 100, to which the adhesive has been applied, during movement thereof.

In this way, according to one embodiment of the present invention, as a result of the piles 221 being adhered to the raw cables 100 by electrostatic force E, a conventional process of winding high price flocked yarns is unnecessary, which may result in a simplified process and enhanced mass productivity of products.

In addition, according to one embodiment of the present invention, adhering the plural piles 221 to the plural raw cables 100 via the adhesive and via the electrostatic force E in the electric field chamber 200 is possible and, therefore, the sunroof cable unit, which is capable of reducing noise and friction between elements used to open or close a sunroof, may achieve reduced manufacturing costs and enhanced mass productivity.

Moreover, according to one embodiment of the present invention, as is clearly shown in FIG. 2, the blowing device 230 serves to generate an air stream within the electric field chamber 200, in order to allow the plural piles 221 fed into the electric field chamber 200 to uniformly float within the electric field chamber 200.

As described above, according to one embodiment of the present invention, in consideration of the fact that the fed piles 221 are not wholly adhered to the raw cables 100 rather being accumulated on the bottom of the chamber 200, generating the air stream using the blowing device 230 may ensure circulation of the piles 221 within the electric field chamber 200, which advantageously allows the piles 221 to be efficiently adhered to the raw cables 100.

The electric field chamber 200 according to one embodiment of the present invention as described above preferably includes the pair of electrodes 210 to generate the electrostatic force E.

Preferably, the pair of electrodes 210 is arranged to face each other about a given directional axis and charges of different polarities are applied to the electrodes 210 facing each other.

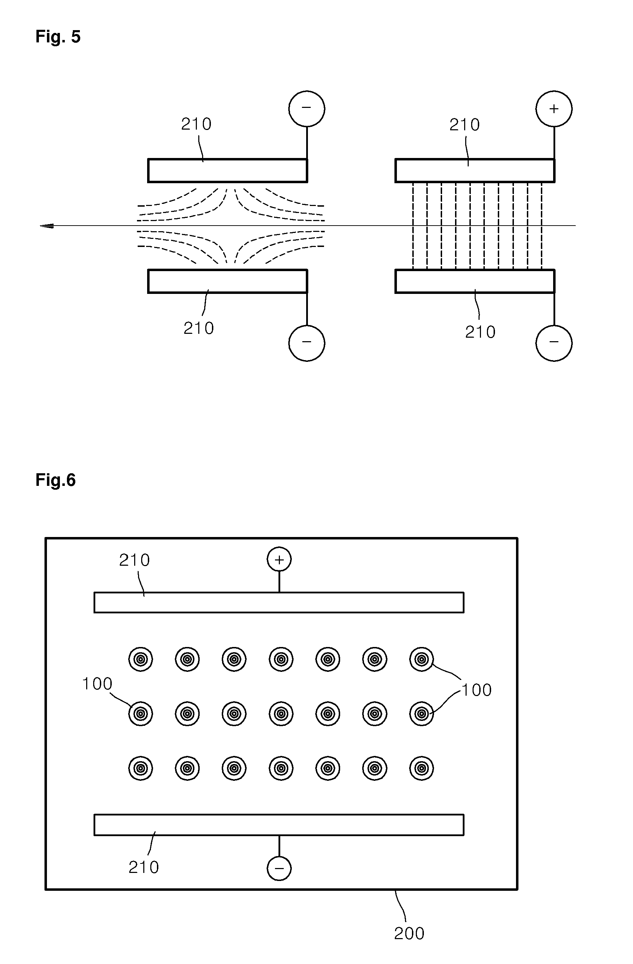

FIG. 5 is a view for explanation of the direction of electrostatic force E depending on charges applied to the pair of electrodes.

In a case in which the electrodes 210 are arranged to face each other about a given directional axis and charges of different polarities are applied to the electrodes 210 facing each other as described above, as exemplarily shown in FIGS. 2 to 5, electrostatic force is generated from the positive electrode to the negative electrode. In such a state, as exemplarily shown in FIG. 4, the piles 221 fed into the chamber 200 may be adhered to the raw cables 100 in a direction from the positive electrode to the negative electrode or from the negative electrode to the positive electrode. This advantageously allows the piles 221 to be attached to the raw cables 100 in a simplified manner and to be aligned in a given direction.

Assuming that charges of the same polarity are applied to the pair of electrodes 210, as exemplarily shown in FIG. 5, electrostatic force E may be applied outward, which causes the piles 221 to be not adhered to the raw cables 100 or the piles 221 to loss their directivity.

FIG. 6 is a view for explanation of the arrangement of a plurality of raw cables for adhesion of piles thereto according to one embodiment of the present invention.

According to one embodiment of the present invention, as exemplarily shown in FIG. 6, it is advantageously possible to simultaneously attach the piles 221 to the plural raw cables 100.

On the other hand, the electric field chamber 200 according to another embodiment of the present invention is preferably configured to rotate at least one of the electrodes 210 and the raw cables 100 introduced into the electric field chamber 200 relative to the other one.

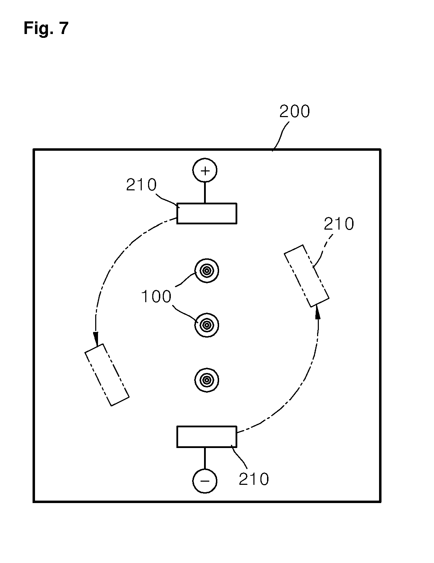

FIG. 7 is a view for explanation of rotation of a pair of electrodes about raw cables according to another embodiment of the present invention.

Note that the raw cables 100 may be rotated as exemplarily shown in FIG. 4, and the pair of electrodes 210 may be rotated as exemplarily shown in FIG. 7.

When the pair of electrodes 210 is rotated as exemplarily shown in FIG. 7, there is an advantage in that the piles 221 may be uniformly adhered to the raw cables 100 without rotation of the respective raw cables 100.

Meanwhile, although the above embodiment of the present invention illustrates rotation of the pair of electrodes 210, the pair of electrodes 210 may be radially spaced apart from each other by a constant distance. This radial arrangement of the pair of electrodes 210 spaced apart from each other by a constant distance disadvantageously increases required device installation space, but may advantageously increase durability of a device because rotation of the electrodes or the raw cables is unnecessary.

As is apparent from the above description, the present invention has the effect of reducing friction and noise of a sunroof cable unit owing to the fact that a plurality of piles is adhered to a plurality of raw cables at once.

In addition, according to one embodiment of the present invention, as the piles are attached to the raw cables by electrostatic force and an adhesive, a conventional process of winding high price flocked yarns is unnecessary. Accordingly, the present invention has the effect of simplifying a manufacturing process and achieving enhanced mass productivity of products and reduced manufacturing costs.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A sunroof cable unit configured to transmit power to a sunroof of an automobile, the sunroof cable unit comprising:
a raw cable including a core extending by a long length in a given directional axis and a coil helically surrounding the core, the coil defining a groove between a pair of neighboring helices;
an adhesive layer formed by applying an adhesive to the groove of the raw cable; and
a plurality of piles adhered to the adhesive layer by electrostatic force generated in an electric field.

2. A manufacturing method of a sunroof cable unit, the sunroof cable unit being configured to transmit power to a sunroof of an automobile, the manufacturing method comprising:
simultaneously transporting a plurality of raw cables to an electric field chamber, wherein each raw cable extends by a long length in a given directional axis;
applying an adhesive to a groove defined in each raw cable prior to introducing the raw cables into the electric field chamber; and
generating electrostatic force within the electric field chamber in a state in which the plural raw cables are introduced into the electric field chamber, so as to adhere a plurality of piles to the grooves of the plural raw cables to which the adhesive has been applied.

3. The manufacturing method according to claim 2, further comprising generating an air stream within the electric field chamber using a blowing device to allow the plural piles fed into the electric field chamber to uniformly float within the electric field chamber.

4. The manufacturing method according to claim 2,
wherein a pair of electrodes constituting the electric field chamber is arranged to face each other about the given directional axis, and
wherein charges of different polarities are applied to the pair of electrodes arranged to face each other.

5. The manufacturing method according to claim 2, wherein the raw cables introduced into the electric field chamber are rotated between electrodes, or the electrodes are rotated relative to the raw cables.

6. A sunroof cable unit manufactured by the manufacturing method of the sunroof cable unit according to any one of claims 2 to 5.
